(19) Europäisches Patentamt
European Patent Office
Office européen des brevets

(11) **EP 4 772 418 A1**

(12) **EUROPEAN PATENT APPLICATION**
published in accordance with Art. 153(4) EPC

(43) Date of publication:
**08.07.2026 Bulletin 2026/28**

(21) Application number: **24881766.0**

(22) Date of filing: **25.10.2024**

(51) International Patent Classification (IPC):
**B62D 6/00** (2006.01)

(52) Cooperative Patent Classification (CPC):
**B62D 5/0484; B62D 5/04; B62D 6/00; B62D 7/159;**
**B62D 5/0481; B62D 6/002**

(86) International application number:
**PCT/CN2024/127482**

(87) International publication number:
**WO 2025/087407 (01.05.2025 Gazette 2025/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **27.10.2023 CN 202311411705**

(71) Applicant: **Great Wall Motor Company Limited**
**Baoding, Hebei 071000 (CN)**

(72) Inventors:
• **YANG, Wenqian**
**Baoding, Hebei 071000 (CN)**

• **SUN, Huiyun**
**Baoding, Hebei 071000 (CN)**
• **ZHAO, Yongpo**
**Baoding, Hebei 071000 (CN)**
• **GAO, Sijia**
**Baoding, Hebei 071000 (CN)**
• **WANG, Dongdong**
**Baoding, Hebei 071000 (CN)**
• **GUO, Jiawei**
**Baoding, Hebei 071000 (CN)**

(74) Representative: **Michalski Hüttermann & Partner**
**mbB**
**Kaistraße 16A**
**40221 Düsseldorf (DE)**

(54) **METHOD AND APPARATUS FOR CONTROLLING STEERING OF REAR WHEELS, AND VEHICLE AND STORAGE MEDIUM**

(57) Provided are a method and apparatus for controlling steering of a rear wheel, a vehicle, and a storage medium. The method for controlling the steering of the rear wheel includes: determining, in response to a fault occurring in a front-wheel steering-by-wire system of a vehicle, a steering control quantity of a steering wheel in the vehicle; determining a target steering control quantity for the rear wheel in the vehicle based on the steering control quantity, a target steering ratio between the steering wheel and a front wheel, and a yaw direction value; and controlling the steering of the rear wheel based on the target steering control quantity. Since yaw is generated due to steering of the front wheel, the yaw direction value is introduced when determining the target steering control quantity, enabling the steering with the rear wheel to produce the same steering effect as the steering with the front wheel. Therefore, when the fault occurs in the front-wheel steering-by-wire system, the method can not only assist the vehicle in performing steering through the rear wheel, but also provide the same steering effect as the front wheel, which is in line with a steering habit of a vehicle user.

Method 200

Determine, in response to a fault occurring in a front-wheel steering-by-wire system of a vehicle, a steering control quantity of a steering wheel in the vehicle — Step 201

Determine a target steering control quantity for the rear wheel in the vehicle based on the steering control quantity, a target steering ratio between the steering wheel and a front wheel, and a yaw direction value, where the yaw direction value indicates that a steering direction of the rear wheel is opposite to a steering direction of the front wheel when the steering wheel rotates towards a target direction — Step 202

Control the steering of the rear wheel based on the target steering control quantity — Step 203

FIG. 2

EP 4 772 418 A1

## Description

This application claims priority to Chinese Patent Application No. 202311411705.8, titled "METHOD AND APPARATUS FOR CONTROLLING STEERING OF REAR WHEELS, AND VEHICLE AND STORAGE MEDIUM", and filed with China National Intellectual Property Administration on October 27, 2023, the entire disclosure of which is incorporated herein by reference.

## FIELD

The present disclosure relates to the field of vehicle technologies, and more particularly, to a method and apparatus for controlling steering of a rear wheel, a vehicle, and a storage medium in the field of vehicle technologies.

## BACKGROUND

Currently, steering control of a vehicle is typically realized by a Steering By Wire (SBW) system controlling steering of a front wheel of the vehicle. However, the SBW may fail.

For the vehicle equipped with the SBW system, if the SBW fails, the vehicle cannot achieve effective steering. For driving safety of the vehicle, a driving trajectory of the vehicle can be controlled through the rear wheel to assist the vehicle in steering. However, how to achieve the same steering effect with the rear wheel as with the front wheel has become an urgent problem to be solved.

## SUMMARY

The present disclosure provides a method and apparatus for controlling steering of a rear wheel, a vehicle, and a storage medium. The method can not only assist the vehicle in steering through the rear wheel when the front-wheel steering-by-wire system fails, but also provide the same steering effect as the front wheel, which is in line with a steering habit of a vehicle user.

In a first aspect, the present disclosure provides a method for controlling steering of a rear wheel. The method includes: determining, in response to a fault occurring in a front-wheel steering-by-wire system of a vehicle, a steering control quantity of a steering wheel in the vehicle; determining a target steering control quantity for the rear wheel in the vehicle based on the steering control quantity, a target steering ratio between the steering wheel and front wheel, and a yaw direction value, where the yaw direction value is a numerical value indicating that a steering direction of the rear wheel is opposite to a steering direction of the front wheel when the steering wheel rotates towards a target direction; and controlling the steering of the rear wheel based on the target steering control quantity.

In the above technical solution, when the fault occurs in the front-wheel steering-by-wire system of the vehicle, the front-wheel steering-by-wire system cannot control the front wheel to realize vehicle steering. Therefore, the rear wheel need to be engaged to achieve the vehicle steering. In this solution, in response to the fault occurring in the front-wheel steering-by-wire system, the steering control quantity of the steering wheel in the vehicle is determined; and the target steering control quantity for the rear wheel is determined based on the steering control quantity, the target steering ratio between the steering wheel and the front wheel, and the yaw direction value. Since yaw is generated due to the steering of the front wheel, which is caused by rolling resistance of the wheel, the yaw direction value is introduced in this solution in the process of determining the target steering control quantity for the rear wheel. This allows yaw generated during the steering of the rear wheel to be consistent with the yaw generated during the steering of the front wheel, thereby providing the same steering effect. In the process of determining the target steering control quantity, a target angle by which the rear wheel is steered can be determined based on the steering control quantity and the target steering ratio. Therefore, when the fault occurs in the front-wheel steering-by-wire system, this solution can assist the vehicle in steering through the rear wheel, ensuring safety of a user in the vehicle during driving. Further, this solution can provide the same steering effect as the steering with the front-wheel, which is in line with a steering habit of a vehicle user.

In conjunction with the first aspect, in some possible embodiments, the front-wheel steering-by-wire system includes a steering wheel module and a steering-by-wire execution module; and determining the fault occurring in the front-wheel steering-by-wire system of the vehicle includes: determining the fault in the front-wheel steering-by-wire system in response to a number of first fault state signals received from the steering wheel module within a first predetermined duration being greater than a first predetermined number; and/or determining the fault in the front-wheel steering-by-wire system in response to a number of second fault state signals received from the steering-by-wire execution module within a second predetermined duration being greater than a second predetermined number.

In the above technical solution, the front-wheel steering-by-wire system in the vehicle includes the steering wheel module and the steering-by-wire execution module. The fault in the front-wheel steering-by-wire system is typically caused by a fault in the steering wheel module and/or the steering-by-wire execution module. Therefore, whether the fault occurs in the front-wheel steering-by-wire system can be determined by whether the number of first fault state signals received from the steering wheel module within the first predetermined duration is greater than the first predetermined number; and/or whether the number of second fault state signals received from the steering-by-wire execution module within the second predetermined duration is greater than the second predetermined number. In conjunction with the first aspect and the above embodiment, in some possible embodiments, the determining the steering control quantity of the steering wheel in the vehicle includes: determining the steering control quantity by using a steering angle sensor of the steering wheel module in response to no fault occurring in the steering wheel module in the front-wheel steering-by-wire system; and obtaining the steering control quantity from a target system via a controller area network of the vehicle in response to a fault occurs in the steering wheel module. The target system is configured to determine the steering control quantity.

In the above technical solution, the front-wheel steering-by-wire system includes the steering wheel module and the steering-by-wire execution module. The steering wheel module includes the steering wheel and the steering angle sensor. The steering wheel is connected to the steering angle sensor. When no fault occurs in the steering wheel module, vehicle components in the steering wheel module can operate normally. Therefore, the steering control quantity of the steering wheel can be determined by the steering angle sensor. This solution can determine an accurate steering control quantity and then obtain an accurate target steering control quantity to control the steering of the rear wheel more accurately. When the fault occurs in the steering wheel module, the steering control quantity determined by other systems can be obtained via a vehicle CAN bus (the controller area network of the vehicle). This solution can avoid a process of a failure to determine the steering control quantity of the steering wheel when the fault occurs in the steering wheel module.

In conjunction with the first aspect and the above embodiment, in some possible embodiments, the determining the target steering control quantity for the rear wheel in the vehicle based on the steering control quantity, the target steering ratio between the steering wheel and the front wheel, and the yaw direction value includes: determining a ratio of the steering control quantity to the target steering ratio as a first angle; and determining a product of the first angle and the yaw direction value as the target steering control quantity.

In conjunction with the first aspect and the above embodiment, in some possible embodiments, the controlling the steering of the rear wheel based on the target steering control quantity includes: determining, based on the target steering control quantity, a target direction in which the rear wheel is to be steered and a target angle by which the rear wheel is to be steered; and steering the rear wheel towards the target direction by the target angle.

In the above technical solution, typically, prior to steering the wheel, it is necessary to determine the steering direction and the steering angle (value) of the wheel. Therefore, in this solution, the target direction in which the rear wheel is to be steered and the target angle by which the rear wheel is to be steered can be determined based on the target steering control quantity; and then the rear wheel can be steered towards the target direction by the target angle. That is, when the fault occurs in the front-wheel steering-by-wire system, steering of the rear wheel is used to mimic the steering effect of the front wheel to meet the steering demand of the vehicle user and be in line with the steering habit of the vehicle user.

In conjunction with the first aspect and the above embodiment, in some possible embodiments, the determining, in response to the fault occurring in the front-wheel steering-by-wire system of the vehicle, the steering control quantity of the steering wheel in the vehicle includes: controlling, in response to the fault occurring in the front-wheel steering-by-wire system, a maximum allowable rotation angle of the steering wheel; and determining, in response to a rotation operation on the steering wheel, the steering control quantity of the steering wheel with the maximum allowable rotation angle as a constraint.

In the above technical solution, in order to improve stability of a vehicle body during the steering, a maximum steering angle of the rear wheel during the steering is often limited. Since the target steering control quantity for the rear wheel in this solution is related to the steering control quantity of the steering wheel, which includes the steering angle and the steering direction, the maximum steering angle of the rear wheel can be indirectly limited by controlling the maximum allowable rotation angle of the steering wheel. That is, in response to the rotation operation on the steering wheel, the steering control quantity of the steering wheel is determined under the limitation of the maximum allowable rotation angle. Thus, the steering of the rear wheel is controlled based on the target steering control quantity. As a result, the vehicle body can be maintained stable and is less likely to lose control during the steering.

In conjunction with the first aspect and the above embodiment, in some possible embodiments, the method further includes: detecting whether a fault occurs in a rear-wheel steering system in the vehicle; and in response to no fault occurring in the rear-wheel steering system, performing the determining the target steering control quantity for the rear wheel in the vehicle based on the steering control quantity, the target steering ratio between the steering wheel and the front wheel, and the yaw direction value.

The above technical solution is equivalent to detecting whether the fault occurs in the rear-wheel steering system in the vehicle prior to realizing the steering process of the vehicle through the rear wheel. The target steering control quantity for the rear wheel is determined only in response to no fault occurring in the rear-wheel steering system. This solution can avoid the process of determining the target steering control quantity in response to the fault occurring in the rear-wheel steering system, which can avoid a problem of wasting computing resources.

In a second aspect, the present disclosure provides an apparatus for controlling steering of a rear wheel. The apparatus includes a determination module and a control module. The determination module is configured to: determine, in response to a fault occurring in a front-wheel steering-by-wire system of a vehicle, a steering control quantity of a steering wheel in the vehicle; and determine a target steering control quantity for the rear wheel in the vehicle based on the steering control quantity, a target steering ratio between the steering wheel and front wheel, and a yaw direction value, where the yaw direction value is a numerical value indicating that a steering direction of the rear wheel is opposite to a steering direction of the front wheel when the steering wheel rotates towards a target direction. The control module is configured to control the steering of the rear wheel based on the target steering control quantity.

In conjunction with the second aspect, in some possible embodiments, the front-wheel steering-by-wire system includes a steering wheel module and a steering-by-wire execution module. The determination module is configured to: determine the fault in the front-wheel steering-by-wire system in response to a number of first fault state signals received from the steering wheel module within a first predetermined duration being greater than a first predetermined number; and/or determine the fault in the front-wheel steering-by-wire system in response to a number of second fault state signals received from the steering-by-wire execution module within a second predetermined duration being greater than a second predetermined number.

In conjunction with the second aspect and the above embodiment, in some possible embodiments, the determination module is configured to: determine the steering control quantity by using a steering angle sensor of the steering wheel module in response to no fault occurring in the steering wheel module in the front-wheel steering-by-wire system; and obtain the steering control quantity from a target system via a controller area network of the vehicle in response to a fault occurring in the steering wheel module. The target system is configured to determine the steering control quantity.

In conjunction with the second aspect and the above embodiment, in some possible embodiments, the determination module is further configured to: determine a ratio of the steering control quantity to the target steering ratio as a first angle; and determine a product of the first angle and the yaw direction value as the target steering control quantity.

In conjunction with the second aspect and the above embodiment, in some possible embodiments, the determination module is further configured to determine, based on the target steering control quantity, a target direction in which the rear wheel is to be steered and a target angle by which the rear wheel is to be steered. The control module is configured to steer the rear wheel towards the target direction by the target angle.

In conjunction with the second aspect and the above embodiment, in some possible embodiments, the control module is further configured to control, in response to the fault occurring in the front-wheel steering-by-wire system, a maximum allowable rotation angle of the steering wheel. The determination module is further configured to determine, in response to a rotation operation on the steering wheel, the steering control quantity of the steering wheel with the maximum allowable rotation angle as a constraint.

In conjunction with the second aspect and the above embodiment, in some possible embodiments, the apparatus further includes a detection module configured to detect whether a fault occurs in a rear-wheel steering system in the vehicle. The determination module is further configured to, in response to no fault occurring in the rear-wheel steering system, perform the determining the target steering control quantity for the rear wheel in the vehicle based on the steering control quantity, the target steering ratio between the steering wheel and the front wheel, and the yaw direction value.

In a third aspect, the present disclosure provides a vehicle. The vehicle includes a memory, a processor, and a computer program stored in the memory and executable on the processor. The processor, when executing the computer program, causes the vehicle to perform the method of the first aspect or any one of the possible embodiments of the first aspect as described above.

In a fourth aspect, the present disclosure provides a computer-readable storage medium. The computer-readable storage medium has instructions stored thereon. The instructions, when executed on a computer or a processor, cause the computer or the processor causes the computer or processor to the method of the first aspect or any one of the possible embodiments of the first aspect as described above.

**BRIEF DESCRIPTION OF THE DRAWINGS**

FIG. 1 is a schematic diagram of an architecture of a front-wheel steering-by-wire system according to an embodiment of the present disclosure.
FIG. 2 is a schematic flowchart of a method for controlling steering of a rear wheel according to an embodiment of the present disclosure.
FIG. 3 is a block diagram of a method for controlling steering of a rear wheel according to an embodiment of the present disclosure.
FIG. 4 is a schematic diagram of a scenario of controlling steering of a rear wheel according to an embodiment of the present disclosure.
FIG. 5 is a schematic structural diagram of an apparatus for controlling steering of a rear wheel according to an embodiment of the present disclosure.
FIG. 6 is a schematic structural diagram of a vehicle according to an embodiment of the present disclosure.

## DETAILED DESCRIPTION OF THE EMBODIMENTS

The technical solutions in the present disclosure will be described clearly and in detail below with reference to the accompanying drawings. In the description of the embodiments of the present disclosure, "a plurality of" refers to two or more than two. Terms such as "first" and "second" are used herein for purposes of description and are not intended to indicate or imply relative importance, or to implicitly show the number of indicated technical features. Thus, the feature defined with "first" and "second" may include one or more this feature distinctly or implicitly.

A SWB system eliminates mechanical connection components between a steering wheel and a steered wheel in a conventional steering system. The SWB involves a process including converting a detected steering intention into a digital signal, and transmitting the digital signal to a steering controller; and the steering controller controlling the steered wheel to perform steering. Since the SBW system eliminates the mechanical connection components such as the steering column between the steering wheel and the steered wheel, the steering-by-wire technology can greatly improve driving safety performance of the vehicle and prevent injury to the driver caused by the steering column in a traffic accident.

The SBW system includes a steering wheel module and a steering-by-wire execution module. The steering wheel module includes vehicle components such as a steering wheel, a steering angle sensor, a road feel motor, and a speed reduction mechanism. The steering-by-wire execution module includes vehicle components such as a steered wheel, a steering motor, and a speed reduction mechanism. In addition, the SBW system further includes components such as a steering controller and a power supply.

The steering wheel module is configured to receive a steering operation from a driver. The steering angle sensor is configured to determine a rotation angle and a rotation speed of the steering wheel. The road feel motor and the gear reduction mechanism are configured to provide the driver with a motion state of the vehicle, road surface state information, and self-centering torque of the steering wheel.

For the steering-by-wire execution module, the steering motor and the speed reduction mechanism are configured to overcome steering resistance and steer the steered wheel by a corresponding steering angle.

The steering controller is configured to determine the steering angle of the steered wheel based on the rotation angle of the steering wheel, and send a control signal for steering the steered wheel by the steering angle to the steering motor to allow the steering motor to drive the steered wheel to steer by the steering angle. In addition, the power supply may be a vehicle power supply in the vehicle.

In some embodiments, the steered wheel is a front wheel of the vehicle. In a case where the steered wheel is the front wheel, the SBW system may be regarded as a front-wheel steering-by-wire system.

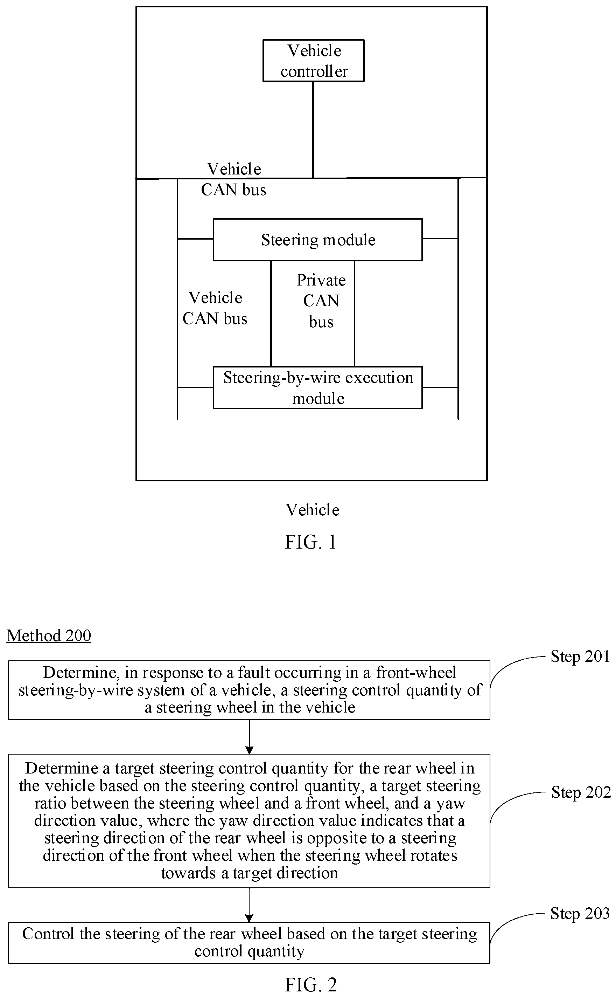

FIG. 1 is a schematic diagram of an architecture of a front-wheel steering-by-wire system according to an embodiment of the present disclosure. As shown in FIG. 1, the front-wheel steering-by-wire system of the vehicle shown in FIG. 1 includes a steering wheel module and a steering-by-wire execution module. The steered wheel in the steering-by-wire execution module is the front wheel of the vehicle. In response to a fault occurring in the steering wheel module, a vehicle controller in the vehicle obtains a rotation angle of the steering wheel determined by a target system through a vehicle controller area network (CAN) bus, determine a steering angle of the front wheel based on the rotation angle, and send, via the vehicle CAN bus, a control signal for steering the front wheel by the steering angle to a steering motor in the steering-by-wire execution module. The steering motor drives the front wheel to steer by the steering angle to achieve steering of the vehicle. It should be understood that the target system refers to any system in the vehicle that can determine the rotation angle of the steering wheel when a fault occurs in the steering wheel module.

It should be understood that the vehicle CAN bus in the above solution is configured for a signal interaction between the SBW system and the vehicle controller, and a private CAN bus is configured for a signal interaction in the SBW system.

It should also be understood that various faults may occur in the front-wheel steering-by-wire system due to long-term operation of the front-wheel steering-by-wire system and external factors. For example, the steering angle sensor in the steering wheel module cannot collect the rotation angle of the steering wheel, and the steering motor in the steering-by-wire execution module cannot rotate. When a fault occurs in any device in the front-wheel steering-by-wire system, the vehicle is unable to perform effective steering. In this case, considering driving safety of the vehicle, a driving trajectory of the vehicle can be controlled through rear wheel to assist the vehicle in performing steering. However, how to achieve the same steering effect with the rear wheel as with the front wheel has become an urgent problem to be solved.

In order to solve the above problem of how to achieve the same steering effect with the rear wheel as with the front wheel, the present disclosure provides a method for controlling steering of a rear wheel, to mimic steering with the front wheel through the rear wheel when a fault occurs in the front-wheel steering-by-wire system and thus to achieve the steering of the vehicle and achieve the same steering effect as the front wheel. In the following, the method for controlling the steering of the rear wheel according to an embodiment of the present disclosure will be introduced. Referring to FIG. 2, FIG. 2 is a schematic flowchart of a method for controlling steering of a rear wheel according to an embodiment of the present disclosure.

It should be understood that the method for controlling the steering of the rear wheel according to the embodiment of the present disclosure may be applied in the vehicle shown in FIG. 1. In an embodiment, the method for controlling the steering of the rear wheel may be applied in a target controller in the vehicle. The target controller is any one of the vehicle controller and a body domain controller in the vehicle. The body domain controller is configured to control various vehicle components in the vehicle. When the target controller is the body domain controller, the body domain controller is configured to control the rear wheel in the vehicle.

It should also be understood that the method for controlling the steering of the rear wheel in the present disclosure is applicable to all vehicles that support steering by wire and are equipped with the steering of the rear wheel.

Exemplarily, as shown in FIG. 2, the method 200 includes following steps 201 to 203.

At step 201, in response to a fault occurring in a front-wheel steering-by-wire system of a vehicle, a steering control quantity of a steering wheel in the vehicle is determined by a vehicle controller.

It should be understood that the "front-wheel steering-by-wire system" in the above step 201 may be a steering-by-wire system in which the steered wheel is the front wheel of the vehicle. The front-wheel steering-by-wire system includes the steering wheel module and the steering-by-wire execution module, and further includes the steering controller. In the solutions of the present disclosure, the steering controller is the vehicle controller. The fault occurring in the front-wheel steering-by-wire system may be a fault occurring in the steering wheel module and/or a fault occurring in the steering-by-wire execution module.

It should also be understood that the "steering control quantity of the steering wheel" in the above step 201 is equivalent to the "rotation angle of the steering wheel" in the previous solution, and may include a rotation angle and a rotation direction of the steering wheel.

In a possible embodiment, the front-wheel steering-by-wire system includes a steering wheel module and a steering-by-wire execution module. The fault in the front-wheel steering-by-wire system of the vehicle in the step 201 may be determined by: the vehicle controller determining that the fault occurs in the front-wheel steering-by-wire system in response to the number of first fault state signals received from the steering wheel module within a first predetermined duration being greater than a first predetermined number; and/or the vehicle controller determining that the fault occurs in the front-wheel steering-by-wire system in response to the number of second fault state signals received from the steering-by-wire execution module within a second predetermined duration being greater than a second predetermined number.

It should be understood that in the above solution, the steering wheel module may send the first fault state signal to the vehicle controller via the vehicle CAN bus, and the steering-by-wire execution module may also send the second fault state signal to the vehicle controller via the vehicle CAN bus.

In the above solution, the front-wheel steering-by-wire system in the vehicle includes the steering wheel module and the steering-by-wire execution module. The fault in the front-wheel steering-by-wire system may generally include the fault in the steering wheel module and/or the steering-by-wire execution module. Therefore, whether the fault occurs in the front-wheel steering-by-wire system may be determined by determining whether the number of the first fault state signals received from the steering wheel module within the first predetermined duration is greater than the first predetermined number and/or whether the number of the second fault state signals received from the steering-by-wire execution module within the second predetermined duration is greater than the second predetermined number.

In some embodiments, the first predetermined number and the second predetermined number are the same and may be 15 times.

In some embodiments, the first predetermined duration and the second predetermined duration are the same and may be 10 ms.

In a possible embodiment, the determining, by the vehicle controller, the steering control quantity of the steering wheel in the vehicle in step 201 includes: determining, by the vehicle controller, the steering control quantity by using the steering angle sensor in the steering wheel module in response to no fault occurring in the steering wheel module in the front-wheel steering-by-wire system; and obtaining, by the vehicle controller, the steering control quantity from a target system via a controller area network of the vehicle in response to the fault occurring in the steering wheel module. The target system is configured to determine the steering control quantity.

It should be understood that when no fault occurs in the steering wheel module, any device in the steering wheel module is capable of operating. Therefore, the vehicle controller can determine the steering control quantity of the steering wheel by using the steering angle sensor in the steering wheel module. When the fault occurs in the steering wheel module, even if the steering angle sensor has no fault and can obtain the steering control quantity of the steering wheel, the steering control quantity cannot be transmitted to the vehicle controller. Therefore, the present disclosure obtains the steering control quantity determined by another system via the vehicle CAN bus. In this way, it can be ensured that the steering control quantity is obtained when the fault occurs in the steering wheel module in the front-wheel steering-by-wire system, thereby determining the target steering control quantity for the rear wheel to assist in steering the vehicle. Therefore, safety of the vehicle can be ensured.

It should also be understood that in the solution of the present disclosure, when the fault occurs in the steering wheel module in the front-wheel steering-by-wire system, the vehicle controller can intervene to determine the steering control quantity of the steering wheel, determine the target steering control quantity for the rear wheel of the vehicle based on the steering control quantity, a target steering ratio between the steering wheel and the front wheel, and a yaw direction value, and control the steering of the rear wheel based on the target steering control quantity, and the like. When no fault occurs in the steering wheel module, a controller in the front-wheel steering-by-wire system, i.e., the steering controller, is used, which may serve as a determination module mentioned in the above apparatus for controlling the steering of the rear wheel.

In the above technical solution, the front-wheel steering-by-wire system includes the steering wheel module and the steering-by-wire execution module. The steering wheel module includes the steering wheel and the steering angle sensor. The steering wheel is connected to the steering angle sensor. When no fault occurs in the steering wheel module, the vehicle components in the steering wheel module can operate normally. Therefore, the steering control quantity of the steering wheel can be determined by the steering angle sensor. This solution can determine an accurate steering control quantity and then obtain an accurate target steering control quantity to control the steering of the rear wheel more accurately. When the fault occurs in the steering wheel module, the steering control quantity determined by another system can be obtained via the vehicle CAN bus. This solution can avoid a failure to determine the steering control quantity of the steering wheel when the fault occurs in the steering wheel module.

In some embodiments, the target system includes a three-axis acceleration sensor in the vehicle. The target system is configured to collect a driving parameter of the vehicle in real time through the three-axis acceleration sensor and determine a steering angle of the rear wheel; and determine the steering control quantity of the steering wheel based on the steering angle of the rear wheel.

It should be understood that the three-axis acceleration sensor can detect an acceleration, position, velocity, etc. of the vehicle in a three-dimensional space.

In some embodiments, the determining, by the vehicle controller, the steering control quantity of the steering wheel in the vehicle includes: collecting, by the vehicle controller, an initial image prior to a rotation of the steering wheel and a target image subsequent to the rotation of the steering wheel by using a visual sensor in the vehicle in response to the fault occurring in the steering wheel module, where the visual sensor is located above the steering wheel; and determining, by the vehicle controller, the steering control quantity based on an initial position of the steering wheel in the initial image and a target position of the steering wheel in the target image.

In the above technical solution, when the fault occurs in the steering wheel module, even if no fault occurs in the steering angle sensor, the steering control quantity of the steering wheel can be obtained, but cannot be transmitted to the vehicle controller. Therefore, the present disclosure adopts a vision-based method to determine the steering control quantity of the steering wheel. In this way, it can be ensured that when the fault occurs in the steering wheel module in the front-wheel steering-by-wire system, the steering control quantity is obtained, thereby determining the target steering control quantity for the rear wheel to assist in steering the vehicle. Therefore, the safety of the vehicle can be advantageously ensured.

In some embodiments, the visual sensor is any sensor that is capable of collecting a position image of the steering wheel by the vision-based method.

In some embodiments, the visual sensor is a monocular camera or a multi-view camera.

In some embodiments, the determining, by the vehicle controller, the steering control quantity based on the initial position of the steering wheel in the initial image and the target position of the steering wheel in the target image includes: determining, by the vehicle controller, a first position of a target reference point when the steering wheel is located at the initial position and a second position of the target reference point when the steering wheel is located at the target position; with a body center of the steering wheel as an origin, determining, by the vehicle controller, an angle between a first connection line and a second connection line as a rotation angle of the steering wheel in the steering control quantity, and determining, by the vehicle controller, a rotation direction of the steering wheel in the steering control quantity based on a position of the target reference point at the second position relative to the target reference point at the first position. The first connection line is a connection line between the target reference point at the first position and the origin, and the second connection line is a connection line between the target reference point at the second position and the origin.

It should be understood that, generally, the steering wheel of the vehicle of any brand is provided with a brand identifier. The brand identifier includes a graphic identifier and/or a text identifier. Therefore, the target reference point in the above solution may be a reference point on the graphic identifier or the text identifier.

It should also be understood that, generally, the steering wheel has a circular shape, and may be two-spoke, three-spoke, four-spoke, etc. The two-spoke steering wheel refers to a steering wheel having two spokes. The three-spoke steering wheel refers to a steering wheel having three spokes. The four-spoke steering wheel refers to a steering wheel having four spokes. Therefore, the steering control quantity of the steering wheel may be determined according to position changes of a plurality of spokes of the steering wheel before and after rotation.

In some embodiments, the determining, by the vehicle controller, the rotation direction of the steering wheel in the steering control quantity based on the position of the target reference point at the second position relative to the target reference point at the first position includes: determining, by the vehicle controller, the direction as a counterclockwise direction when the target reference point at the second position is located to the left of the target reference point at the first position; determining, the vehicle controller, the direction as a clockwise direction when the target reference point at the second position is located to the right of the target reference point at the first position.

In a possible embodiment, step 201 includes: controlling, by the vehicle controller, a maximum allowable rotation angle of the steering wheel in response to the fault occurring in the front-wheel steering-by-wire system; and in response to a rotation operation on the steering wheel, determining, by the vehicle controller, the steering control quantity of the steering wheel with the maximum allowable rotation angle as a constraint.

In the above technical solution, in order to improve stability of a vehicle body during the steering, the maximum steering angle of the rear wheel during the steering is often limited. Since the target steering control quantity for the rear wheel in this solution is related to the steering control quantity of the steering wheel, which includes the rotation angle and the rotation direction, the maximum steering angle of the rear wheel during the steering can be indirectly limited by controlling the maximum allowable rotation angle of the steering wheel. That is, in response to the rotation operation on the steering wheel, the steering control quantity of the steering wheel is determined with the maximum allowable rotation angle as the constraint. Thus, the steering of the rear wheel is controlled based on the target steering control quantity. As a result, the vehicle body can maintain stable and is less likely to lose control during the steering.

In some embodiments, the maximum allowable rotation angle is a product of a maximum steering angle when the rear wheel is steered and a target steering ratio. The target steering ratio is a target steering ratio between the steering wheel and the front wheel.

It should be understood that the maximum steering angle when the rear wheel is steered is 10 degrees. When the fault occurs in the front-wheel steering-by-wire system in the vehicle and the vehicle travels at a low speed, the vehicle cannot realize large-angle steering through the rear wheel, but can still meet driving needs in a low-speed scenario. For example, vehicle parking can be supported. When the fault occurs in the front-wheel steering-by-wire system in the vehicle and the vehicle travels at a high speed, the rotation angle of the steering wheel is generally within 180 degrees, the target steering ratio is 18, and the corresponding steering angle of the rear wheel is within 10 degrees, which can also meet high-speed driving needs of the vehicle.

At step 202, the target steering control quantity for the rear wheel in the vehicle is determined by the vehicle controller based on the steering control quantity, the target steering ratio between the steering wheel and the front wheel, and the yaw direction value. The yaw direction value is a numerical value indicating that a steering direction of the rear wheel is opposite to a steering direction of the front wheel when the steering wheel rotates towards a target direction.

It should be understood that the "target steering control quantity for the rear wheel" in the above step 202 is equivalent to the "steering angle of the rear wheel" in the previous solution, and includes the target direction when the rear wheel is to be steered and the target angle when the rear wheel is to be steered.

It should also be understood that due to the steering angle characteristic of the vehicle, the "target steering ratio" in the step 202 gradually decreases as the rotation angle of the steering wheel increases. This is for vehicle safety considerations.

In a possible embodiment, the step 202 includes: determining, by the vehicle controller, a ratio of the steering control quantity to the target steering ratio as a first angle; and determining, by the vehicle controller, a product of the first angle and the yaw direction value as the target steering control quantity.

It should be understood that the "first angle" in the above solution is the steering angle of the front wheel.

In some embodiments, a method for determining the yaw direction value includes: determining, by the vehicle controller, a yaw rate of the front wheel at which the front wheel is steered based on a driving speed of the vehicle, a distance between the front wheel and the rear wheel of the vehicle, and a steering angle of the front wheel of the vehicle, and determining, by the vehicle controller, a yaw rate of the rear wheel at which the rear wheel is steered based on the driving speed, the distance between the front wheel and the rear wheel, and a steering angle of the rear wheel; and determining, by the vehicle controller, the yaw direction value based on the yaw rate of the front wheel and the yaw rate of the rear wheel.

It should be understood that the "distance between the front wheel and the rear wheel of the vehicle" in the above solution is a distance between the front wheel and the rear wheel on the same side. The "yaw rate" refers to a deflection of the wheel in the vehicle around a vertical axis, which can be simply understood as a lateral swing speed of the wheel.

It should also be understood that the "steering angle of the front wheel" and the "steering angle of the rear wheel" in the above solution are used to generally refer to the steering angle of the wheel and have no specific meaning.

In some embodiments, the determining, by the vehicle controller, the yaw rate of the front wheel at which the front wheel is steered based on the driving speed of the vehicle, the distance between the front wheel and the rear wheel of the vehicle, and the steering angle of the front wheel of the vehicle includes: determining, by the vehicle controller, the yaw rate of the front wheel based on the following formula (1):

$$\omega_1 = \frac{v/L}{1+Kv^2}\left(\delta_f - 0\right) \qquad (1),$$

where:

$\omega_1$ represents the yaw rate of the front wheel, $v$ represents the driving speed; L represents the distance between the front wheel and the rear wheel, $\delta_f$ represents the steering angle of the front wheel, and K represents a constant.

In some embodiments, the determining, by the vehicle controller, the yaw rate of the rear wheel at which the rear wheel is steered based on the driving speed, the distance between the front wheel and the rear wheel of the vehicle, and the steering angle of the rear wheel includes: determining, by the vehicle controller, the yaw rate of the rear wheel based on the following formula (2),

$$\omega_2 = \frac{v/L}{1+Kv^2}(0 - \delta_r) \qquad (2),$$

where:

$\omega_2$ represents the yaw rate of the rear wheel, $v$ represents the driving speed, $L$ represents the distance between the front wheel and the rear wheel, $\delta_f$ represents the steering angle of the rear wheel, and $K$ represents a constant.

In some embodiments, the determining, by the vehicle controller, the yaw direction value based on the yaw rate of the front wheel and the yaw rate of the rear wheel includes: determining, by the vehicle controller, a ratio between a first numerical value corresponding to the yaw rate of the front wheel and a second numerical value corresponding to the yaw rate of the rear wheel as the yaw direction value. A sign of the first numerical value indicates a direction of the yaw rate of the front wheel, and a sign of the second numerical value indicates a direction of the yaw rate of the rear wheel.

It should be understood that during actual driving, a direction of the yaw rate of the front wheel differs from a direction of the yaw rate of the rear wheel. Therefore, in the process of mimic the steering with the front wheel through the rear wheel, an impact of the yaw rate needs to be considered in order to achieve the same steering effect as the steering with the front wheel. In view of this, the present disclosure introduces the yaw direction value in the process of determining the target steering control quantity for the rear wheel. As a result, when the rear wheel performs steering with the target steering control quantity, the same steering effect as the front wheel is achieved, which is in line with a steering habit of a vehicle user.

In a possible embodiment, the method 200 further includes: detecting, by the vehicle controller, whether a fault occurs in the rear-wheel steering system in the vehicle; and in response to no fault occurring in the rear-wheel steering system, performing the determining the target steering control quantity for the rear wheel in the vehicle based on the steering control quantity, the target steering ratio between the steering wheel and the front wheel, and the yaw direction value.

The above technical solution is equivalent to detecting whether the fault occurs in the rear-wheel steering system in the vehicle prior to realizing the steering process of the vehicle through the rear wheel. The target steering control quantity for the rear wheel is determined only when no fault occurs in the rear-wheel steering system. This solution can avoid the process of determining the target steering control quantity in response to the fault occurring in the rear-wheel steering system, which can avoid a problem of wasting computing resources.

At step 203, steering of the rear wheel is controlled by the vehicle controller based on the target steering control quantity.

In a possible embodiment, step 203 includes: determining, by the vehicle controller based on the target steering control quantity, a target direction in which the rear wheel is to be steered and a target angle by which the rear wheel is to be steered; and steering, by the vehicle controller, the rear wheel towards the target direction by the target angle.

Generally, before steering the wheel, it is necessary to determine the steering direction and the steering angle (value) of the wheel. Therefore, in this solution, the target direction in which the rear wheel is to be steered and the target angle by which the rear wheel is to be steered may be determined based on the target steering control quantity; and then the rear wheel may be steered towards the target direction by the target angle. That is, when the fault occurs in the front-wheel steering-by-wire system, the rear wheel is steered to mimic the effect of the steering with the front wheel, to meet the steering demand of the vehicle user and be in line with the steering habit of the vehicle user.

In some embodiments, the determining, by the vehicle controller based on the target steering control quantity, the target direction in which the rear wheel is to be steered and the target angle by which the rear wheel is to be steered includes: in response to the target steering control quantity being positive, determining, by the vehicle controller, the target direction to be clockwise and the target angle to be an absolute value of the target steering control quantity; and in response to the target steering control quantity being negative, determining, by the vehicle controller, the target direction to be counterclockwise and the target angle to be the absolute value of the target steering control quantity.

In some embodiments, the method 200 further includes, subsequent to the step 203: controlling, the vehicle controller, a display screen of the vehicle to display reminder information or a voice output device of the vehicle to play the reminder information. The reminder information is used to remind that the steering of the vehicle is being controlled through the rear wheel.

In the above technical solution, after it is determined by the vehicle controller that the rear wheel is to be steered based on the target steering control quantity, the vehicle controller controls the vehicle to output the reminder information. In this way, a user in the vehicle can be reminded that the vehicle is being steered through the rear wheel and to adjust a sitting posture to avoid bumping.

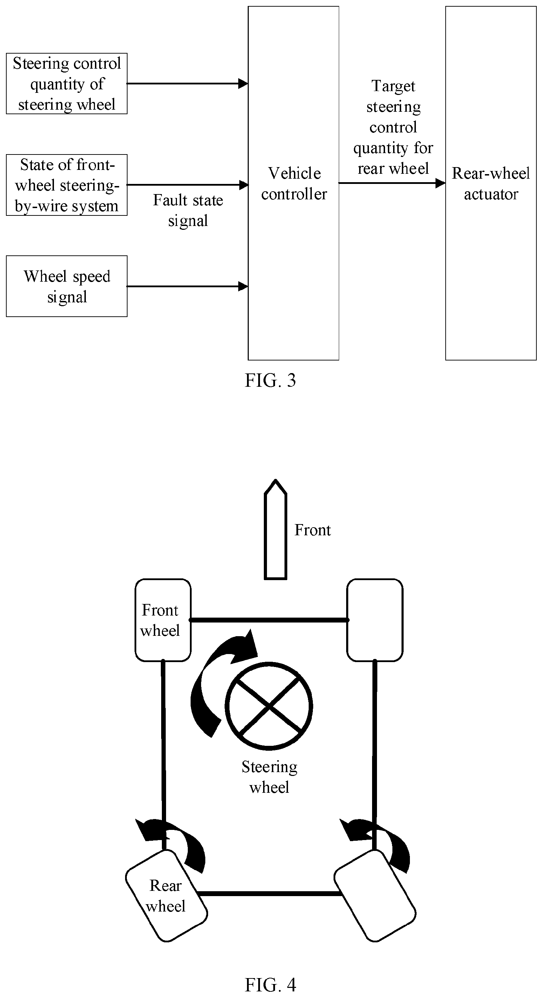

Next, referring to FIG. 3, FIG. 3 is a block diagram of a method for controlling steering of a rear wheel according to an embodiment of the present disclosure. Exemplarily, as shown in FIG. 3, in response to no first fault state signal being received from the steering wheel module in the front-wheel stee ring-by-wire system of the vehicle within the first predetermined duration, and the number of second fault state signal received from the steering-by-wire execution module in the front-wheel steering-by-wire system within the second predetermined duration being greater than the second predetermined number, the vehicle controller determines that a fault occurs in the steering-by-wire execution module, and a fault occurs in the front-wheel steering-by-wire system, such that the steering of the vehicle cannot be realized through the front wheel. The vehicle controller obtains the steering control quantity of the steering wheel by using the steering angle sensor in the steering wheel module, and obtains the driving speed of the vehicle based on the wheel speed signal of the vehicle, The vehicle controller determines the yaw rate of the front wheel of the vehicle at which the front wheel is steered based on the driving speed, the distance between the front wheel and the rear wheel, and the steering angle of the front wheel of the vehicle, and determines the yaw rate of the rear wheel of the vehicle at which the rear wheel is steered based on the driving speed, the distance between the front wheel and the rear wheel, and the steering angle of the rear wheel of the vehicle. The vehicle controller determines the yaw direction value based on the yaw rate of the front wheel and the yaw rate of the rear wheel. The yaw direction value is a numerical value indicating that the steering direction of the rear wheel is opposite to the steering direction of the front wheel when the steering wheel rotates towards the target direction. The vehicle controller determines the target steering control quantity due the rear wheel based on the steering control quantity, the target steering ratio between the steering wheel and the front wheel, and the yaw direction value. The vehicle controller determines the target direction in which the rear wheel is to be steered and the target angle by which the rear wheel is to be steered based on the target steering control quantity. The vehicle controller sends the target direction in which the rear wheel is to be steered and the target angle by which the rear wheel is to be steered to a steering motor corresponding to the rear wheel, to allow the steering motor to steer the rear wheel by the target angle in the target direction.

Exemplarily, as shown in FIG. 3, in response to the number of first fault state signals received from the steering wheel module in front-wheel steering-by-wire system of the vehicle by the vehicle controller within the first predetermined duration being greater than the first predetermined number, the vehicle controller determines that a fault occurs in the steering wheel module, and a fault occurs in the front-wheel steering-by-wire system, such that the steering of the vehicle cannot be realized through the front wheel. The vehicle controller obtains the steering control quantity of the steering wheel determined by another system via the vehicle CAN bus, and obtains the driving speed of the vehicle based on the wheel speed signal of the vehicle. The vehicle controller determines the yaw rate of the front wheel of the vehicle at which the front wheel is steered based on the driving speed, the distance between the front wheel and the rear wheel, and the steering angle of the front wheel of the vehicle, and determines the yaw rate of the rear wheel of the vehicle at which the rear wheel is steered based on the driving speed, the distance between the front wheel and the rear wheel, and the steering angle of the rear wheel of the vehicle. The vehicle controller determines the yaw direction value based on the yaw rate of the front wheel and the yaw rate of the rear wheel. The yaw direction value is a numerical value indicating that the steering direction of the rear wheel is opposite to the steering direction of the front wheel when the steering wheel rotates towards the target direction. The vehicle controller determines the target steering control quantity for the rear wheel based on the steering control quantity, the target steering ratio between the steering wheel and the front wheel, and the yaw direction value. The vehicle controller determines the target direction in which the rear wheel is to be steered and the target angle by which the rear wheel is to be steered based on the target steering control quantity. The vehicle controller sends the target direction in which the rear wheel is to be steered and the target angle by which the rear wheel is to be steered to the steering motor corresponding to the rear wheel, to allow the steering motor to steer the rear wheel by the target angle in the target direction.

Next, referring to FIG. 4, FIG. 4 is a schematic diagram of a scenario of controlling steering of a rear wheel according to an embodiment of the present disclosure. For example, as shown in FIG. 4, the vehicle controller receives, in response to a fault occurring in the front-wheel steering-by-wire system, a steering demand for the vehicle and determines the steering control quantity of the steering wheel in the vehicle. The vehicle controller determines, in response to the steering control quantity indicating that the steering wheel rotates clockwise, the target steering angle of the rear wheel in the vehicle based on the steering control quantity, the target steering ratio between the steering wheel and the front wheel. The vehicle controller steers the rear wheel counterclockwise by the target steering angle. Corresponding to the aforementioned method 200, in the embodiment shown in FIG. 4, the target steering control quantity in the method 200 includes the target direction in which the rear wheel is to be steered being counterclockwise, and the target angle by which the rear wheel is to be steered being the target steering angle.

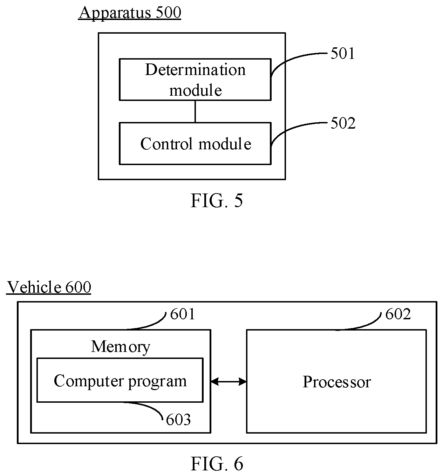

FIG. 5 is a schematic structural diagram of an apparatus for controlling steering of a rear wheel according to an embodiment of the present disclosure.

Exemplarily, as shown in FIG. 5, the apparatus 500 includes a determination module 501 and a control module 502. The determination module 501 is configured to: determine, in response to a fault occurring in a front-wheel steering-by-wire system of a vehicle, a steering control quantity of a steering wheel in the vehicle; and determine a target steering control quantity for the rear wheel in the vehicle based on the steering control quantity, a target steering ratio between the steering wheel and a front wheel, and a yaw direction value. The yaw direction value is a numerical value indicating that a steering direction of the rear wheel is opposite to a steering direction of the front wheel when the steering wheel rotates towards a target direction. The control module 502 is configured to control the steering of the rear wheel based on the target steering control quantity.

Optionally, the front-wheel steering-by-wire system includes a steering wheel module and a steering-by-wire execution module. The determination module 501 is configured to: determine the fault in the front-wheel steering-by-wire system in response to a number of first fault state signals received from the steering wheel module within a first predetermined duration being greater than a first predetermined number; and/or determine the fault in the front-wheel steering-by-wire system in response to a number of second fault state signals received from the steering-by-wire execution module within a second predetermined duration being greater than a second predetermined number.

Optionally, the determination module 501 is further configured to: determine the steering control quantity by using a steering angle sensor of the steering wheel module in response to no fault occurring in the steering wheel module in the front-wheel steering-by-wire system; and obtain the steering control quantity from a target system via a controller area network of the vehicle in response to a fault occurring in the steering wheel module. The target system is configured to determine the steering control quantity.

Optionally, the determination module 501 is further configured to: determine a ratio of the steering control quantity to the target steering ratio as a first angle; and determine a product of the first angle and the yaw direction value as the target steering control quantity.

Optionally, the determination module 501 is further configured to determine, based on the target steering control quantity, a target direction in which the rear wheel is to be steered and a target angle by which the rear wheel is to be steered. The control module 502 is configured to steer the rear wheel towards the target direction by the target angle.

Optionally, the control module 502 is further configured to control, in response to the fault occurring in the front-wheel steering-by-wire system, a maximum allowable rotation angle of the steering wheel. The determination module 501 is further configured to determine, in response to a rotation operation on the steering wheel, the steering control quantity of the steering wheel with the maximum allowable rotation angle as a constraint.

Optionally, the apparatus 500 further includes a detection module configured to detect whether a fault occurs in a rear-wheel steering system in the vehicle. The determination module 501 is further configured to perform the determining the target steering control quantity for the rear wheel in the vehicle based on the steering control quantity, the target steering ratio between the steering wheel and the front wheel, and the yaw direction value.

FIG. 6 is a schematic structural diagram of a vehicle according to an embodiment of the present disclosure.

For example, as shown in FIG. 6, the vehicle 600 includes a memory 601, a processor 602, and a computer program 603 stored in the memory 601 and executable on the processor 602. The processor 602, when executing the computer program 603, causes the vehicle to perform any one of the aforementioned methods for controlling the steering of the rear wheel.

In this embodiment, the vehicle may be divided into functional modules according to the above method examples. For example, the division may correspond to respective functional modules, or two or more functions may be integrated into one processing module. The above integrated module may be achieved in the form of hardware. It should be noted that the division of modules in this embodiment is illustrative and is merely a logical function division, and other division manners may be adopted during actual implementation.

In the case where respective functional modules are provided corresponding to respective functions, the vehicle may include a determination module, a control module, a detection module, and the like. It should be noted that all relevant contents of the steps involved in the above method embodiment may be referred to in the functional description of the corresponding functional module, and details are not described herein again.

The vehicle according to the present embodiment is configured to perform the above method for controlling the steering of the rear wheel, and therefore can achieve the same effect as those of the above implementation method.

In a case where an integrated unit is adopted, the vehicle may include a processing module and a storage module. The processing module may be configured to control and manage an action of the vehicle. The storage module may be configured to store relevant program codes and data for execution by the vehicle.

The processing module may be a processor or a controller, which may implement or execute various exemplary logical blocks, modules, and circuits described in connection with the disclosure of the present disclosure. The processor may also be a combination that implements a computing function, such as a combination of one or more microprocessors, a combination of digital signal processing (DSP) and a microprocessor, and the like. The storage module may be a memory.

The present embodiment provides a computer-readable storage medium. The computer-readable storage medium has instructions stored therein. The instructions, when executed on a computer or a processor, cause the computer or the processor to perform any one of the aforementioned methods for controlling the steering of the rear wheel.

The present embodiment also provides a computer program product. The computer program product includes instructions. The computer program product, when executed on a computer or a processor, causes the computer or the processor to perform the aforementioned related steps to implement any one of the aforementioned methods for controlling the steering of the rear wheel.

The vehicle, the computer-readable storage medium, the computer program product including the instructions, or a chip according to the present embodiment are each configured to perform the corresponding method provided above. Therefore, the beneficial effects achievable thereby may refer to the beneficial effects in the corresponding method provided above, and details thereof are not described herein again.

Through the description of the above embodiments, those skilled in the art can understand that, for the convenience and simplicity of description, only the division of the above functional modules is used as an example for illustration. In practical applications, the above function allocation can be assigned to different functional modules as needed. That is, the internal structure of the apparatus is divided into different functional modules to achieve all or part of the functions described above.

In the embodiments provided in the present disclosure, it should be understood that the disclosed apparatus and method may be implemented in other ways. For example, the apparatus embodiments described above are merely illustrative. For example, the units are merely divided according to logic functions, and can be divided in other ways in actual implementation. For example, a plurality of units or components may be combined or integrated into another apparatus, or some features may be ignored or not executed. In addition, the mutual coupling or direct coupling or communication connection illustrated or discussed may be via some interfaces, or direct coupling or communication connection of devices or units may be in electrical, mechanical, or other forms.

While the specific embodiments of the present disclosure have been described above, the scope of the present disclosure is not limited to these embodiments. Various modifications and alternatives can be easily conceived by any of those skilled in the art without departing from the scope of the present disclosure. Therefore, these modifications and alternatives are to be encompassed by the scope of the present disclosure as defined by the claims as attached.

## Claims

1. A method for controlling steering of a rear wheel, the method comprises:

   determining, in response to a fault occurring in a front-wheel steering-by-wire system of a vehicle, a steering control quantity of a steering wheel in the vehicle;
   determining a target steering control quantity for the rear wheel in the vehicle based on the steering control quantity, a target steering ratio between the steering wheel and a front wheel, and a yaw direction value, wherein the yaw direction value is a numerical value indicating that a steering direction of the rear wheel is opposite to a steering direction of the front wheel when the steering wheel rotates towards a target direction; and
   controlling the steering of the rear wheel based on the target steering control quantity.

2. The method according to claim 1, wherein the front-wheel steering-by-wire system comprises a steering wheel module and a steering-by-wire execution module; and
   wherein determining the fault occurring in the front-wheel steering-by-wire system of the vehicle comprises:

   determining the fault in the front-wheel steering-by-wire system in response to a number of first fault state signals received from the steering wheel module within a first predetermined duration being greater than a first predetermined number; and/or
   determining the fault in the front-wheel steering-by-wire system in response to a number of second fault state signals received from the steering-by-wire execution module within a second predetermined duration being greater than a second predetermined number.

3. The method according to claim 1, wherein the determining the steering control quantity of the steering wheel in the vehicle comprises:

   determining the steering control quantity by using a steering angle sensor of a steering wheel module in response to no fault occurring in the steering wheel module in the front-wheel steering-by-wire system; and
   obtaining the steering control quantity from a target system via a controller area network of the vehicle in response to a fault occurring in the steering wheel module, wherein the target system is configured to determine the steering control quantity.

4. The method according to claim 1, wherein the determining the target steering control quantity for the rear wheel in the vehicle based on the steering control quantity, the target steering ratio between the steering wheel and the front wheel, and the yaw direction value comprises:

   determining a ratio of the steering control quantity to the target steering ratio as a first angle; and
   determining a product of the first angle and the yaw direction value as the target steering control quantity.

5. The method according to claim 4, wherein the controlling the steering of the rear wheel based on the target steering control quantity comprises:

   determining, based on the target steering control quantity, a target direction in which the rear wheel is to be steered and a target angle by which the rear wheel is to be steered; and
   steering the rear wheel towards the target direction by the target angle.

6. The method according to claim 1, wherein the determining, in response to the fault occurring in the front-wheel steering-by-wire system of the vehicle, the steering control quantity of the steering wheel in the vehicle comprises:

   controlling, in response to the fault occurring in the front-wheel steering-by-wire system, a maximum allowable rotation angle of the steering wheel; and
   determining, in response to a rotation operation on the steering wheel, the steering control quantity of the steering wheel with the maximum allowable rotation angle as a constraint.

7. The method according to any one of claims 1 to 6, further comprising:

detecting whether a fault occurs in a rear-wheel steering system in the vehicle; and
in response to no fault occurring in the rear-wheel steering system, performing the determining the target steering control quantity for the rear wheel in the vehicle based on the steering control quantity, the target steering ratio between the steering wheel and the front wheel, and the yaw direction value.

8. An apparatus for controlling steering of a rear wheel, the apparatus comprising:

   a determination module configured to
   determine, in response to a fault occurring in a front-wheel steering-by-wire system of a vehicle, a steering control quantity of a steering wheel in the vehicle;
   determine a target steering control quantity for the rear wheel in the vehicle based on the steering control quantity, a target steering ratio between the steering wheel and front wheel, and a yaw direction value, wherein the yaw direction value is a numerical value indicating that a steering direction of the rear wheel is opposite to a steering direction of the front wheel when the steering wheel rotates towards a target direction; and
   a control module configured to steer the rear wheel based on the target steering control quantity.

9. A vehicle, comprising:

   a memory;
   a processor; and
   a computer program stored in the memory and executable on the processor, wherein the processor, when executing the computer program, causes the vehicle to perform the method for controlling the steering of the rear wheel according to any one of claims 1 to 7.

10. A computer-readable storage medium, having instructions stored therein, wherein the instructions, when executed on a computer or a processor, cause the computer or the processor to perform the method for controlling the steering of the rear wheel according to any one of claims 1 to 7.

Vehicle

FIG. 1

Method 200

Determine, in response to a fault occurring in a front-wheel steering-by-wire system of a vehicle, a steering control quantity of a steering wheel in the vehicle — Step 201

Determine a target steering control quantity for the rear wheel in the vehicle based on the steering control quantity, a target steering ratio between the steering wheel and a front wheel, and a yaw direction value, where the yaw direction value indicates that a steering direction of the rear wheel is opposite to a steering direction of the front wheel when the steering wheel rotates towards a target direction — Step 202

Control the steering of the rear wheel based on the target steering control quantity — Step 203

FIG. 2

```
┌──────────────────┐
│ Steering control │
│   quantity of    │──────────┐
│  steering wheel  │          │
└──────────────────┘          │
                              ▼
┌──────────────────┐    ┌──────────┐              ┌──────────┐
│ State of front-  │    │          │   Target     │          │
│ wheel steering-  │────▶  Vehicle  │   steering    │ Rear-wheel│
│ by-wire system   │ Fault state │ controller │  control      │ actuator  │
└──────────────────┘  signal │          │  quantity for │          │
                              │          │  rear wheel   │          │
┌──────────────────┐          ▲    └──────────┘              └──────────┘
│  Wheel speed     │          │
│    signal        │──────────┘
└──────────────────┘
```

FIG. 3

FIG. 4

Apparatus 500

Determination module — 501

Control module — 502

FIG. 5

Vehicle 600

601

Memory

Computer program

603

602

Processor

FIG. 6

**INTERNATIONAL SEARCH REPORT**

| International application No. |
| --- |
| **PCT/CN2024/127482** |

| A. | CLASSIFICATION OF SUBJECT MATTER |
| --- | --- |

B62D 6/00(2006.01)i

According to International Patent Classification (IPC) or to both national classification and IPC

| B. | FIELDS SEARCHED |
| --- | --- |

Minimum documentation searched (classification system followed by classification symbols)

IPC: B62D 6/00; B62D 1/00; B62D 5/00

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI: 转向控制, 前轮, 后轮, 故障, 失效, 横摆, 横摆方向值, steering, control, front wheel, rear wheel, failure, mulfunction, yaw

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114104097 A (HUMAN HORIZONS (JIANGSU) TECHNOLOGY CO., LTD.) 01 March 2022 (2022-03-01) description, paragraphs 30-126, and figures 1-9 | 1-3, 6-10 |
| X | JP 2006069497 A (NISSAN MOTOR) 16 March 2006 (2006-03-16) description, paragraphs 8-87, and figures 1-9 | 1-3, 6-10 |
| A | CN 114644044 A (GREAT WALL MOTOR CO., LTD.) 21 June 2022 (2022-06-21) entire document | 1-10 |
| A | CN 116654086 A (CHINA FAW GROUP CORP., LTD.) 29 August 2023 (2023-08-29) entire document | 1-10 |
| A | JP 2000238653 A (TOYOTA MOTOR CORP.) 05 September 2000 (2000-09-05) entire document | 1-10 |
| A | JP H07156820 A (MAZDA MOTOR) 20 June 1995 (1995-06-20) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 January 2025** | **20 January 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 772 418 A1**

| INTERNATIONAL SEARCH REPORT | | | | International application No. | |
|---|---|---|---|---|---|
| Information on patent family members | | | | **PCT/CN2024/127482** | |
| Patent document cited in search report | | | Publication date (day/month/year) | Patent family member(s) | Publication date (day/month/year) |
| CN | 114104097 | A | 01 March 2022 | None | |
| JP | 2006069497 | A | 16 March 2006 | None | |
| CN | 114644044 | A | 21 June 2022 | None | |
| CN | 116654086 | A | 29 August 2023 | None | |
| JP | 2000238653 | A | 05 September 2000 | None | |
| JP | H07156820 | A | 20 June 1995 | None | |

Form PCT/ISA/210 (patent family annex) (July 2022)

**EP 4 772 418 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311411705